# EUROPEAN PATENT APPLICATION

(11) **EP 1 416 684 A1**
(43) Date of publication of application: **06.05.2004**
(21) Application number: 02746148.2
(22) Date of filing: 31.07.2002
(51) Int. Cl.: H04L 12/56, H04Q 9/00

(54) **COMMUNICATION METHOD AND COMMUNICATION SYSTEM**

(30) Priority: 07.08.2001 JP 2001238774
(71) Applicant: MATSUSHITA ELECTRIC INDUSTRIAL CO., LTD., Kadoma-shi, Osaka 571-8501 (JP)
(72) Inventor: TANIGUCHI, Koichi, Fukuoka-shi, Fukuoka 816-0081 (JP); MATSUMOTO, Hiroyuki, Fukuoka-shi, Fukuoka 815-0073 (JP); MURAKAWA, Yasushi, Kasuga-shi, Fukuoka 816-0812 (JP)
(74) Representative: Grünecker, Kinkeldey, Stockmair & Schwanhäusser Anwaltssozietät
(86) International application number: PCT/JP2002/007790
(87) International publication number: WO 2003/015357

(57) **Abstract**

A household device installed in a house is connected to an open-type connectionless network from the outside. The household device establishes a connection through the network and maintains it by transmitting data packets continuously to a network server within a certain period of time. A user terminal outside the house gains access to the household device through the network server.

## Description

### FIELD OF THE INVENTION

The present invention relates to a method and system of data communication between data processors connected to an open type network, such as the Internet. The invention also relates to a device and a program for the same.

### BACKGROUND OF THE INVENTION

There are certain methods of making a connectionless data communication between data processors connected to an open type network, such as the Internet or a plurality of networks. One example of such method of the prior art is disclosed in Japanese Patent Unexamined Publication, No.H08-111693. In this method, each of programs of a server and client makes communications among different devices connected to a network of connectionless-mode or connection-mode, by establishing a "connection", or virtual circuit among them. Connectionless-oriented programs of the server and client of this kind make communications with a connection manager prior to data transmission. The connection manager generally denotes a routine or a circuit that establishes and maintains a connection between programs.

The server program requests the connection manager to establish communication with a remote client routine by way of transmitting a message of available service to the connection manager. The connection manager registers available service based on this service message, and sends back a confirmation message of the registration to the server program. Afterwards, the client program transmits to the connection manager an enable request message for requesting a connection to a certain available service to be executed by the server program. When the connection manager receives this message, it transmits a corresponding enable request to the server program. The server program transmits thereafter an approval message to the connection manager, and the connection manager sends back to the server program a virtual circuit identifier ("VCI") corresponding to a connection established between the server program and the remote client routine, in response to it. Subsequently, a network interface of the server, in which the server program is in operation, uses a value of the VCI to transmit a data packet received from the network that has the VCI value.

In the like manner, the client program is modified to be capable of establishing a communication with a remote server routine by transmitting a message to the connection manager for requesting connection to a certain server routine. The connection manager confirms the request by transmitting a reply message of confirmation. The connection manager determines whether or not the requested service is executable by the available server routine, and it establishes a connection with the server routine if the service is executable. The connection manager transmits a connection-established notification to the client program after finding that the connection is established with the server routine. This connection-established notification includes a VCI value corresponding to the established connection. Next, a network interface of the device, in which the client program is in operation, transmits a data packet having the VCI value that it received from the network by using the value of VCI.

In this method, the connection manager selects the most suitable server among those pre-registered servers that are available for providing services, and introduces it to the client when the client requests to the connection manager for some services. As a result, the client holds an end-to-end session with the introduced server. The client searches for a party that provides the desired with certainty, and the connection manager acts as a mediator. The connection manager has information in advance on locations of available servers and their serviceable capacities, and therefore, in response to the enable request of the client, it introduces to the client one of the servers of which services are assurable according to the prior information. Ultimately, the client holds the session with the server.

In this method, it is essential that actual addresses of the connection manager and the client are known to the server in advance in order for the server to permit connection for the session in response to the enable request from the client. The connection manager also needs to have actual addresses of the client and the server.

Another method of the prior art is disclosed in Japanese Patent Unexamined Publication, No. H10-229416. According to this method, there is set an identification number, which corresponds to a connection established according to a certain protocol between devices on a computer network. This identification number is used to establish the connection between the devices, i.e. a first data processor and a second data processor, which are in point-to-point connection. These two data processors thus start data communications thereafter as they are connected through the point-to-point connection and the computer network. Advantages of using this identification number are that it can reduce an amount of headers, and it can establish a plurality of connections. In addition, it can also responds to another enable request from a third data processor by using the identification number set for the connection with the first data processor, and proceed with data transmission and/or reception between the first data processor and the third data processor.

This method uses so-called "terminal address resolution protocol" and "file transfer protocol". It performs "address resolution" with the terminal address resolution protocol, and starts "connectionless" data communications thereafter using the file transfer protocol. In the terminal address resolution protocol, a newly added terminal to the network determines whether there is a "presence of duplication in the terminal address" by means of "broadcast", and periodically makes a "cycle check" to confirm if the terminal address is still valid with respect to others. In the file transfer protocol, it broadcasts the terminal address, receives any reply of actual address from a terminal that matches with the terminal address, and transmits again a real data to the actual address.

By taking the process of resolving any conflict in the address beforehand in this manner, the data processor initiates data transmission with confidence in the address for the subsequent communications.

It is essential in this method that all terminal devices have their own terminal addresses, each assigned uniquely so as to identify them individually, in order to assemble sessions.

### SUMMARY OF THE INVENTION

A communication system includes a first data processor, a second data processor connected to the first data processor via a first network, and a third data processor connected to the first and second data processors via the first network.

The first data processor stores a network address of the second data processor and a protocol used for communication. The second data processor stores a device ID of the first data processor, an identification code for accessing the first data processor from outside thereof, and the protocol in corresponding manner. The first data processor transmits a first data packet to the second data processor under the protocol, the first data packet containing the network address of the second data processor, data indicating that the packet is an initial data packet, and the device ID of the first data processor. The first data processor stands by for receiving a data packet from the second data processor after transmitting the first data packet. The second data processor receives the first data packet under the protocol. If the first data packet contains the data indicating that the packet is the initial data packet, the second data processor stores a network address of a source sending the first data packet contained in the first data packet and to correspond the network address of the source to correspond to the device ID, in addition to the identification code stored in correlation to the device ID contained in the first data packet. If the first data packet does not contain the data indicating that the packet is the initial data packet, the second data processor verifies whether or not the network address contained in correlation to the device ID contained in the first data packet is identical to the network address of the source sending the first data packet, the network address of the source being contained in the first data packet. The second data processor stands by for receiving a second data packet to be transmitted from the third data processor to the first data processor. The second data processor receives the second data packet to be transmitted from the third data processor while the second data processor stands by for receiving the second data packet, the second data packet containing the identification code of the first data processor and the protocol. The second data processor identifies the network address contained in correlation to the identification code contained in the second data packet. The second data processor transmits the second data packet to the network address of the first data processor under the protocol. The first data processor receives the second data packet under the protocol. The first data processor transmits another data packet to the second data processor under the protocol after a predetermined time, the another data packet containing the network address of the second data processor and the device ID of the first data processor in the like manner as the first data packet, the another data packet not containing the data indicating that the packet is the initial data packet.

### BRIEF DESCRIPTION OF THE DRAWINGS

Fig. 1 is a structural diagram of a communication system according to an exemplary embodiment of the present invention;
Fig. 2 illustrates a data packet that a home gateway ("HGW") transmits to a network server in the communication system according to this exemplary embodiment;
Fig. 3 illustrates a data packet transmitted from the HGW and received by the network server according to this exemplary embodiment;
Fig. 4 illustrates a data packet that a user terminal transmits to the HGW or household device via the network server, according to this exemplary embodiment;

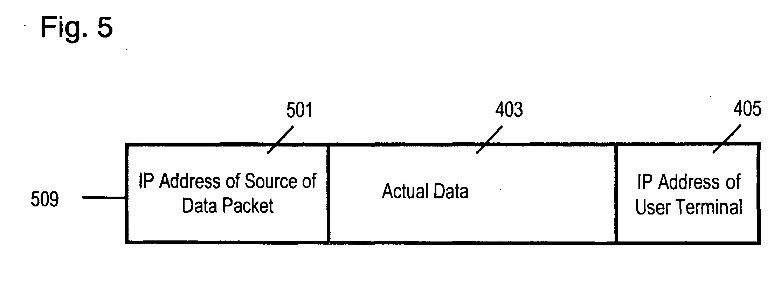

Fig. 5 illustrates a data packet that the network server transmits to the HGW or the household device after converting the data packet received from the user terminal, according to this exemplary embodiment;
Fig. 6 illustrates a network server connection data table according to this exemplary embodiment;
Fig. 7 illustrates a record of user database according to this exemplary embodiment;
Fig. 8 illustrates a record of device database according to this exemplary embodiment;
Fig. 9 illustrates a connection data storage table according to this exemplary embodiment;
Fig. 10 illustrates a record of HGW database according to this exemplary embodiment;
Fig. 11 shows a URL used by the user terminal to identify one of the HGW or the household device it intends to communicate with, according to this exemplary embodiment;
Fig. 12 illustrates a data packet that HGW transmits to the network server according to this exemplary embodiment;
Fig. 13 illustrates another connection data storage table according to this exemplary embodiment;
Fig. 14 illustrates a data packet that the user terminal transmits to the household device or the HGW via the network server, according to this exemplary embodiment;
Fig. 15 illustrates another record of HGW database according to this exemplary embodiment;
Fig. 16 illustrates another network server connection data table according to this exemplary embodiment;
Fig. 17 illustrates a data packet that the network server transmits to the household device or the HGW according to this exemplary embodiment;
Fig. 18 is a detailed structural diagram of the communication system according to this exemplary embodiment;
Fig. 19 is a diagram showing transition of operating state of the communication system according to this exemplary embodiment;
Fig. 20 is another diagram showing transition of operating state of the communication system according to this exemplary embodiment; and
Fig. 21 is still another diagram showing transition of operating state of the communication system according to this exemplary embodiment.

### DESCRIPTION OF THE PREFERRED EMBODIMENT

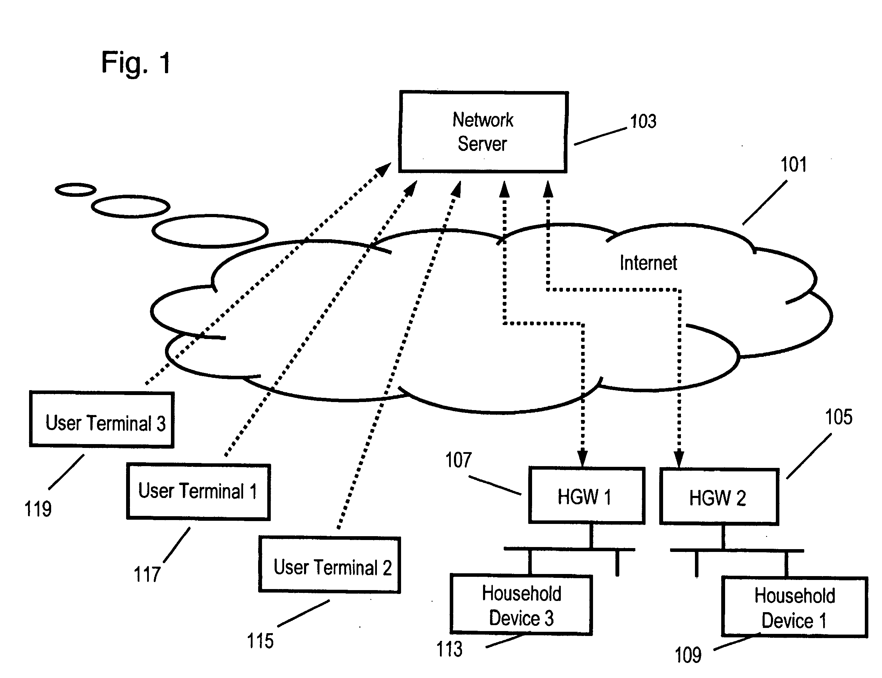

Fig. 1 illustrates a communication system according to an exemplary embodiment of the present invention, and it shows devices 103 through 119 that are connected to Internet 101 and carry out a communication program.

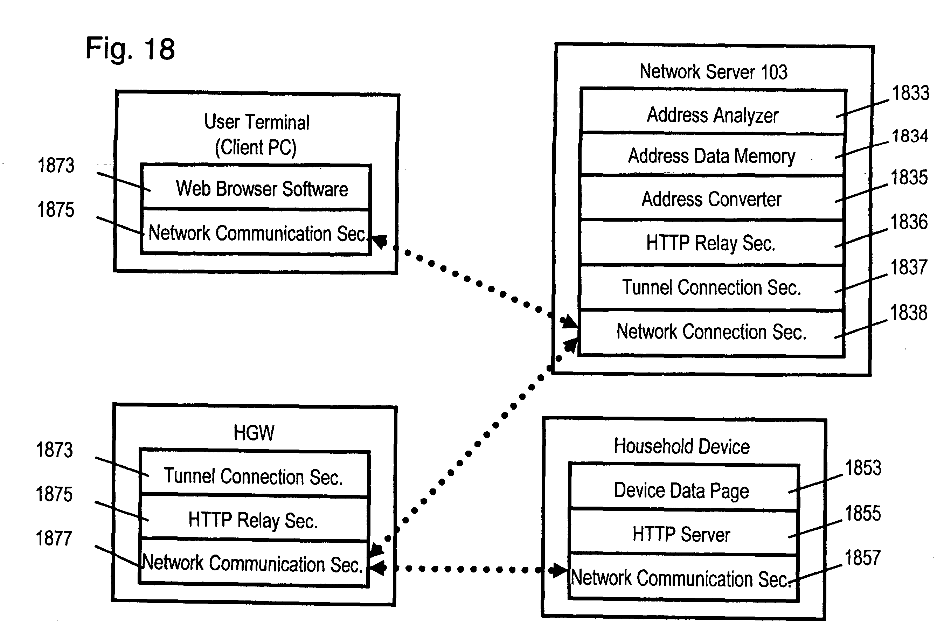

Home gateways ("HGW") 1 and 2 (i.e., first data processors) are connected to the Internet 101, and carry out communications over the Internet 101 with other devices also connected to the Internet 101. These communications are executed by tunnel connection section 1873, Hyper Text Transfer Protocol ("HTTP") relay section 1875, and network communication section 1877, as shown in Fig. 18.

The HGW 1 and 2 are installed in each house, and connected with household device 1 and 3 respectively through a network in the house. The household device 1 and 3 include all device and apparatuses installed in the house, such as an air conditioner, refrigerator, rice cooker, electric jar, washing machine, water heater, television, video player, entrance monitor-camera, fire alarm, and gas sensor. Any of the household device has device data page 1853 shown in Fig. 18, and makes communication through the home network by HTTP server 1855 and network communication section 1857.

The HGW makes data communications with the household device through the home network, collects data from the individual household device, and controls each of the household device.

Installation of the HGW is not necessarily required in each house, but one unit of the HGW can be used for a plurality of houses, or more than one HGW may be installed in one house. Generally, only one unit of the HGW is set up for a plurality of houses, in the case of housing complex, such as an apartment houses.

The HGW communicates with network server 103 via the Internet 101. The HGW stores information necessary for the communications in network server connection data table 601.

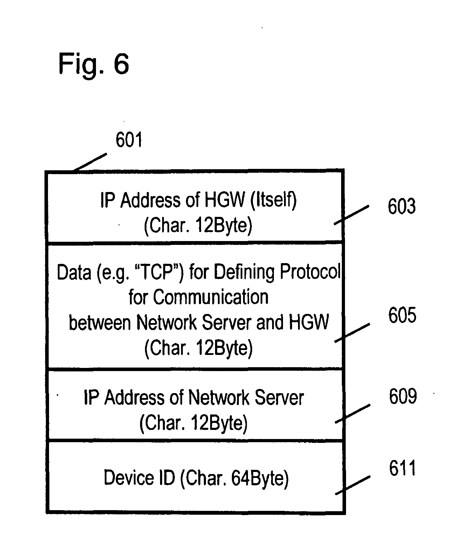

Fig. 6 shows the network server connection data table 601. The data table 601 comprises Internet Protocol ("IP") address 603 of the HGW itself, data 605 defining a protocol used to communicate with the network server 103 via the Internet 101, IP address 609 of the network server 103, and device ID 611 of its own as information to the network server 103.

The network server 103 comprises address analyzer 1833, address data memory 1834, address converter 1835, HTTP relay section 1836, tunnel connection section 1837, and network communication section 1838, as shown in Fig. 18, and it uses these components to carry out transmission of data packets through the network.

Upon start-up, the HGW initializes the data of its own possession. The HGW also initializes all of the device connected to it through the home network, and collects necessary basic data from the individual device.

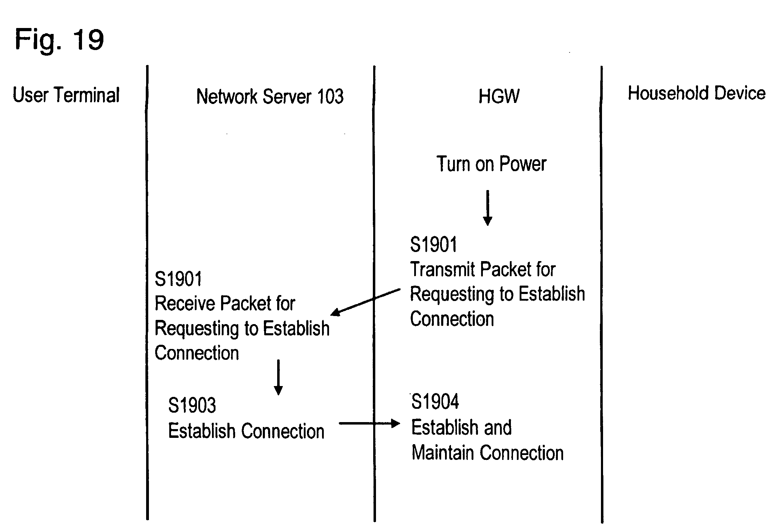

Next, the HGW transmits first data packet 211 to the network server 103 via the Internet 101 based on information in the network server connection data table 601 (Fig. 19 and S1901).

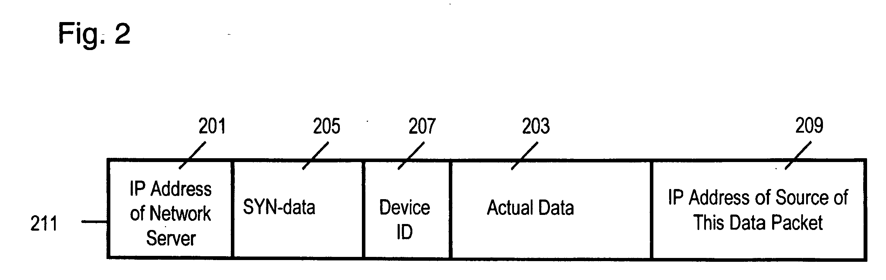

The data packet 211 shown in Fig. 2 comprises IP address 201 of the network server 103, SYN-data 205, device ID 207 which is the HGW's own ID, actual data 203, and IP address 209 of a source of this data packet. The SYN-data 205 informs the network server 103 whether or not this data packet 211 is an initial data packet, and whether or not it demands a connection to be established newly between the HGW and the network server by way of this data packet 211. If the SYN-data 205 represents a digit "1", the data packet 211 is the initial data packet, and it demands the network server 103 to newly establish a connection between the HGW and the network server. If the SYN-data 205 represents a digit "0", the data packet 211 is not initial data packet, and it demands the network server 103 to continue using the connection that has already been established between the HGW and the network server without establishing a new connection by way of this data packet 211.

The network server 103 receives the data packet 211 which is transmitted by the HGW to the network server 103 through the Internet 101 (Fig. 19 and S1902).

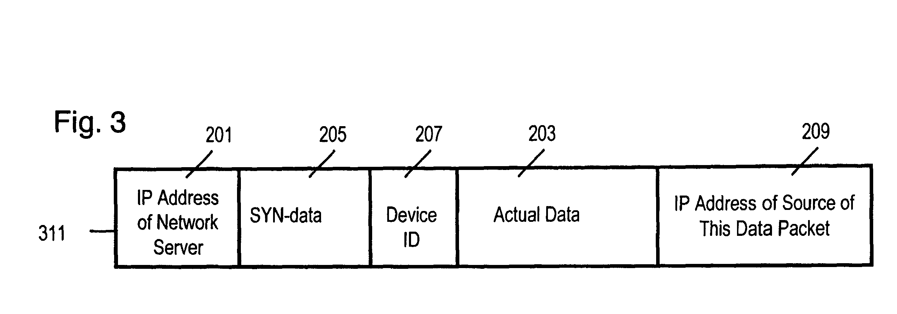

Data packet 311 shown in Fig. 3 comprises IP address 201 of the network server 103, SYN-data 205, device ID 207 which is the HGW's own ID, actual data 203, and IP address 309 of a source that sent this data packet.

IP address 209 of the source of packet 211 may be same as IP address 309 of the source of packet 311, or they can be different addresses. The IP addresses of the sources of these data packets may either be or not be changed on their way of transmission through the Internet 101.

The network server 103 checks a value of the SYN-data 205 contained in the data packet 311 when it receives the data packet 311. If the SYN-data has a value "1", the server 103 determines that it is the initial data packet from a HGW which is identified by device ID 207, and carries out the process of establishing a connection between the HGW and the network server 103 using this data packet 311 (Fig. 19 and S1903).

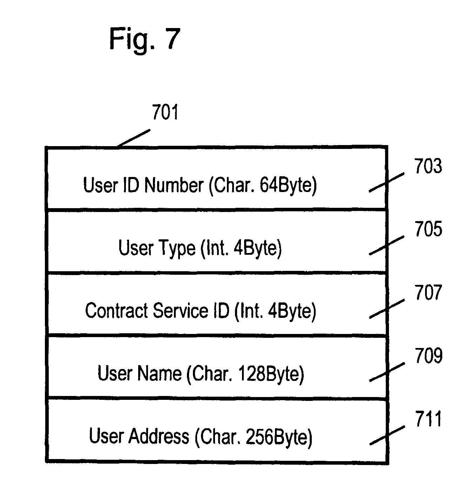

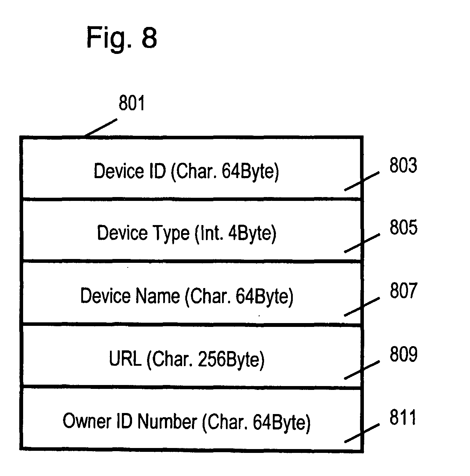

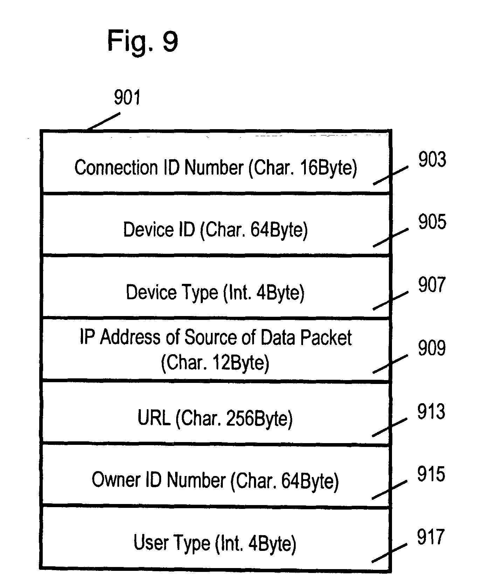

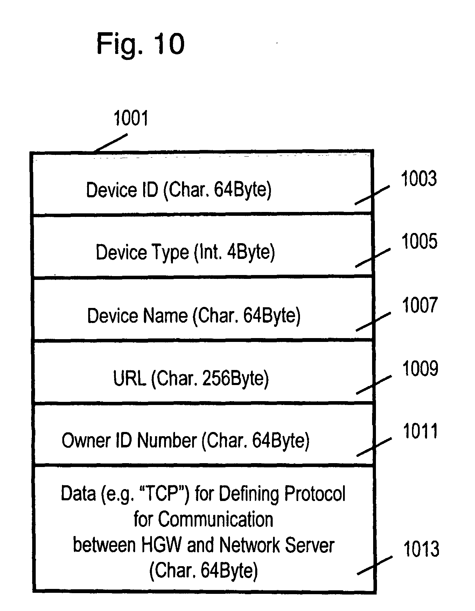

In this process, the network server 103 generates connection data storage table 901 shown in Fig. 9. In other words, when the server 103 received the data packet 211 transmitted from the HGW, it generates the connection data storage table 901 based on the data packet 311, record 701 of user database (Fig. 7), record 801 of device database (Fig. 8), and record 1001 of HGW database (Fig. 10). The server 103 has the records 701, 801 and 1001 stored in advance.

First, the server 103 stores device ID 207 in the received data packet 311 into device ID 905 of the connection data storage table 901, and searches for record 701 of user database, record 801 of device database, and record 1001 of HGW database, by using the device ID 905 as a search key. Since the device ID 905 represents the HGW in this exemplary embodiment, there exists no record 801 having the same device ID 803 as the device ID 905, but there is record 1001, which has the same device ID 1003 as the device ID 905.

The server 103 copies device type 1005 from the record 1001 of HGW database having the same device ID 1003 as the device ID 905, into device type 907 in the connection data storage table 901. In the like manner, the server 103 also copies URL 1009 included in the record 1001 of HGW database into URL 913 in the connection data storage table 901, and owner ID number 1011 into owner ID number 915 in the connection data storage table 901. Using the owner ID number 1011 included in the record 1001 as a search key, the server 103 searches through records 701 of user database, and finds a record 701 that has the same user ID number as the owner ID number 1011. The server 103 then copies user type 705 included in the record 701 into user type 917 in the connection data storage table 901. In addition, the server 103 copies IP address 309 of a source of the data packet 311, as contained in this received data packet 311, into IP address 909 for data packet source in the connection data storage table 901. Finally, the server 103 sets a number that does not duplicate with other connection ID numbers as the connection ID number 903, and uses it as a data representing the connection with the HGW.

The series of processes described above is the steps necessary to take in order to establish a connection between the HGW and the network server 103 when the server 103 receives an initial data packet from an entirely new HGW. The above processes thus complete the task of making an entry of this new HGW into the connection data storage table 901.

Upon completion of the processes of making entry of the new HGW into the connection data storage table 901, and the connection established with the HGW, the server 103 in this exemplary embodiment transmits a data packet to the HGW of notification to that effect (Fig. 19 and S1904).

However, the server 103 needs not notify the HGW, even after it established the connection.

When the server 103 receives data packet 311 with SYN-data 205 having value "0", it confirms that there exists connection data storage table 901 having the same device ID 905 as the device ID 207 by searching with the device ID 207 included in the data packet 311 as a search key.

If there is no record in the connection data storage table 901 having the same device ID 905 as the device ID 207 contained in the received data packet 311, the server 103 sends a data packet containing an error information back to the HGW, which transmitted the data packet 311.

The server 103 confirms that the IP address 309 contained in the received data packet 311, as the source of this data packet, is identical to the IP address 909 of the source of the data packet, as included in the connection data storage table 901 having the same device ID 905 as the device ID 207.

The server 103 also sends back a data packet containing an error information to the HGW which transmitted the data packet 311, if the IP address 309 contained in the received data packet 311 is not identical to the IP address 909 included in the connection data storage table 901 having the same device ID 905 as the device ID 207.

Once the connection is established between the HGW and the network server 103, as described above, the network server 103 can use this connection thereafter to transmit requested data to the HGW when any such request for data transmission to the HGW is directed to the network server 103 from any of the user terminals 1 through 3, i.e., other device connected to the Internet. The steps taken to execute this task will be described hereinafter.

The user terminal is a client's personal computer ("PC") connected to the network, which is provided with Web browser software 1873 as a user interface, and capable of making transmission of data packets via the network with network communication section 1875.

In this exemplary embodiment, the user terminal transmits data to HGW 1 and/or HGW2 to control household device connected to the HGW1 and/or HGW2, and to obtain data from the household device. The HGW's and the household device may be installed in a house of an owner of the user terminal, or they may be installed in a house of other person, such as his/her acquaintance.

Communication is made possible from the user terminal to any of the HGW's through network server 103, by using the connection established between the network server 103 and the HGW.

In this exemplary embodiment, the user terminal may be any such device as a mobile personal computer connected to the Internet and portable to any places or a personal computer installed outside the house, such as his/her business office. The user terminal may also be a cellular phone, a palmtop personal computer and a Personal Data Assistance ("PDA") that can gain access to the Internet. Or, the user terminal may even be a navigation device set up in an automobile and accessible to the Internet, or a television, video player and a stationary telephone set that can be connected to the Internet. In other words, any device other than the above can be used as a user terminal so long as it is connectable to the Internet.

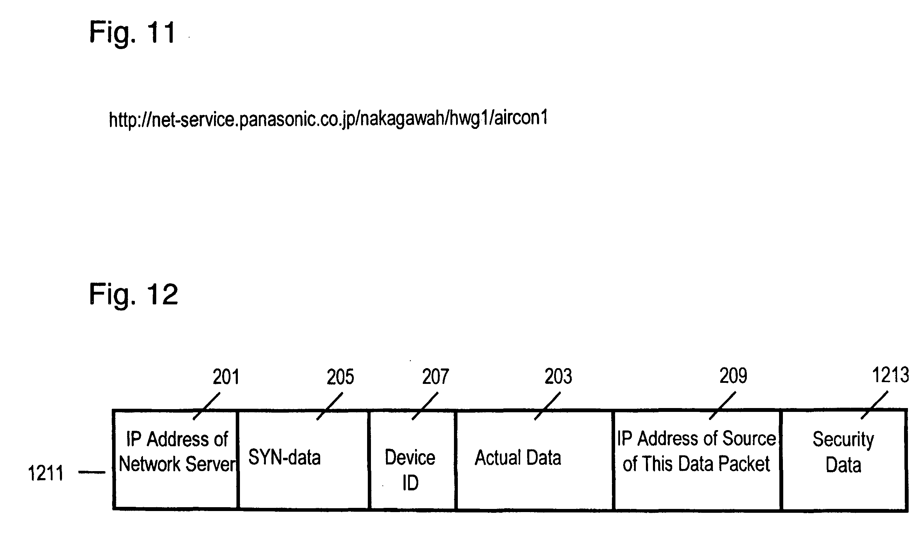

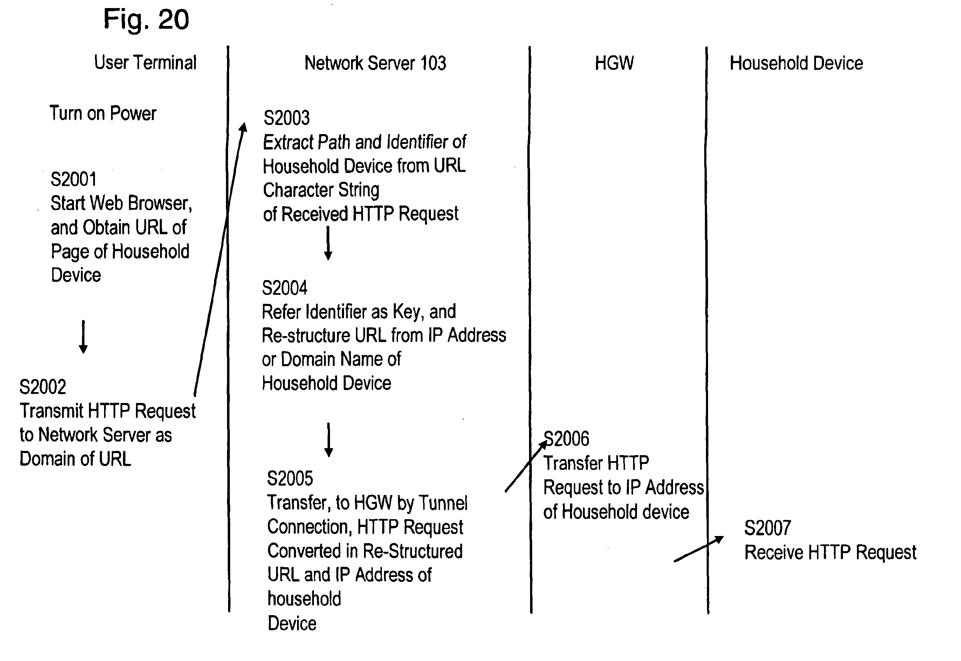

The user terminal uses Uniform Resource Locator ("URL") shown in Fig. 11 in order to specify any of HGW and household device with which it intend to carry out data communication (Fig. 20 and S2001). In this URL, first code "http" indicates a protocol used for data communication between the user terminal and the network server via the Internet. Next code "net-service.panasonic.co.jp" represents the network server 103, and it signifies that a data packet is transmitted via the network server 103. The following code "nakagawah/hwg1/aircon1" is composed of "nakagawah" indicating a house from where data is transmitted, "hwg1" indicating a HGW installed in the house, and "aircon1" indicating air conditioner 1 which is household device connected to the HGW with a home network.

The last part "aircon1" in the above URL indicating the air conditioner is not needed in such an instance wherein the HGW transmits data, and the household device is not connected to the HGW.

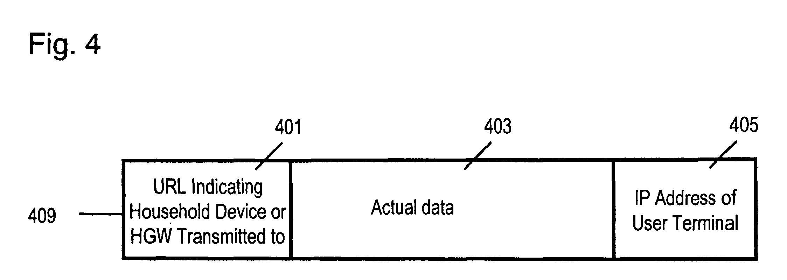

Fig. 4 shows data packet 409 that the user terminal transmits to the household device via the server. The data packet 409 comprises URL 401 specifying the HGW or the household device as an address to which the data packet 409 is transmitted, data 403 to be actually transmitted, and IP address 405 of the user terminal, from which this data packet 409 is transmitted.

The user terminal transmits the data packet 409 to the network server 103 via the Internet (Fig. 20 and S2002).

Upon receipt of the data packet 409, the network server 103 searches through URL 913 in the record of connection data storage table 901 to find same URL as the URL 401 contained in the data packet 409 (Fig. 20 and S2003).

If there is thesame URL as the URL 401 of the data packet 409, found in URL 913 in the record of the connection data storage table 901, the network server 103 can transmit data packet 409 to the HGW or the household device, since a connection has already been established between the HGW or the household device in connection with the HGW and the network server 103.

During this process, the network server 103 converts the received data packet 409 into another data packet 509 to be transmitted to the HGW or the household device.

In this conversion, the URL 401 included in the data packet 409 is replaced with IP address 909 of the source of this data packet. IP address 909 exits in the record having the same URL 913 in the connection data storage table 901 (Fig. 20 and S2004). No change is made on the data 403 to be transmitted and the IP address 405 of the user terminal, or portions other than the URL 401 in the data packet 409.

The network server 103 transmits the data packet 509, in which the URL 401 is replaced with the IP address 909, to the designated HGW or the household device via the Internet 101 (Fig. 20 and S2005).

If URL 401 of the data packet 409 is not found in the URL 913 in the record of the connection data storage table 901, it means that a connection to the HGW or the household device has not been established, and the server 103 is unable to transmit the data packet to the destined HGW or the household device.

In this case, the network server 103 sends back a data packet containing an error information to the user terminal, or the source of the data packet 409.

The data packet 509 transmitted via the Internet is received by the designated HGW. If the designated recipient is not the HGW, but household device connected to the HGW through a home network, the HGW transmits the received data packet 509 to the designated household device via the home network (Fig. 20 and S2006).

With the series of processes as described, the user terminal can thus transmit the data packet 509 to the destined HGW or the household device via the Internet 101, network server 103, and the established connection.

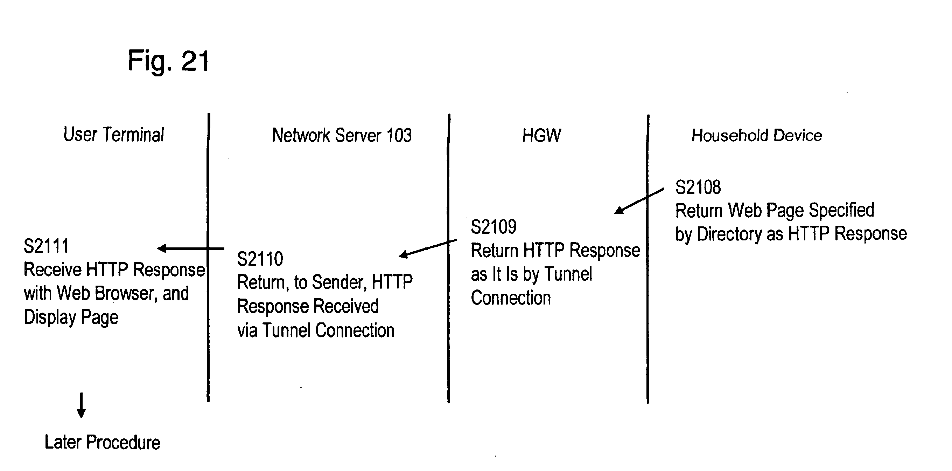

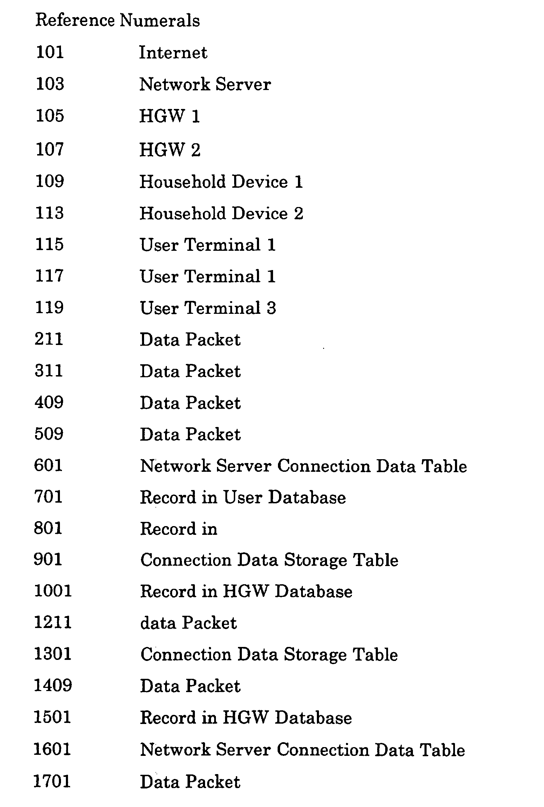

When the HGW or the household device receives the data packet 509, it interprets the actual data 403 contained in the data packet 509, and carries out a process specified by the data (Fig. 20 and S2007). If a content of the data 403 directs household device to execute a specific mode of control, for instance, the household device that received the data packet 509 carries out the control as directed. If the content demands household device to send back data in its possession relating to a matter in the house, for instance, the household device that received the data packet 509 sends back the specified data according to the demand as directed (Fig. 21 and S2108). Or, if the household device is a video player, and content of the data 103 demands it to record a TV program on channel five from 8:00 pm to 10:00 pm of the day, for instance, the video player records the TV program as directed.

Furthermore, a destination of the packet 509 may be the HGW itself, and content of the data 403 may be a request that the HGW transmits an image being taken by surveillance camera 3 installed in the house to the user terminal. The HGW then transmits images taken and sent continuously from the surveillance camera 3 in the house via the home network to the user terminal having IP address 405 contained in the data packet 509 (Fig. 21 and S2109). The data packet transmitted in this process from the HGW to the user terminal is same as the data packet 211 shown in Fig. 2. However, IP address 201 of the network server contained in the data packet 211 is replaced with IP address 405 of the user terminal. The data packet 211 is received by the network server 103, and transmitted to the user terminal that requested the data (Fig. 21 and S2110). The user terminal, which requested the image of the surveillance camera in the house, receives the data packet 211 from the HGW, and processes, displays, prints out, and so forth, as needed, the camera image contained in the data 203 (Fig. 21 and S2111).

Or, the packet 509 may be transmitted to a gas meter installed in the house as a household device connected to the HGW. A gas company supplying gas to the house, or any other entity that has a business relation with the gas company to measure amount of gas consumption in the house operates a user terminal to transmit a packet to the gas meter. A business computer within the gas company may be used as the user terminal. An example of control task assigned by a data contained in the packet is to demand the gas meter to transmit a meter reading showing the present amount of gas consumption. The HGW receives data packet 509 once from the user terminal, and transmits it to the gas meter via the home network. When the gas meter receives the data packet 509, it reads data 403 contained in the data packet 509, interprets the content, and grasps the demand that is requesting it to transmit a meter reading of its own indicating the present amount of gas consumption. The gas meter produces data packet 211 by including the meter reading as a data contained therein, and sets IP address 405 of the user terminal included in the data packet 509 as address 201 representing a destination of the data packet 211. The meter then transmits the data packet 211 to the user terminal via the Internet 101. A business computer, i.e., the user terminal, of the gas company or the like which sent the demand of the meter reading of the gas meter receives the data packet 211 containing the meter reading in the data 203, calculates the amount of gas consumption using the data 203, stores it, and makes a billing of gas usage charge according to the amount of consumption.

In the communication system of this exemplary embodiment, as described, a connection is established momentarily to the network so as to carry a communication through this connection. Therefore, it is not necessary to maintain the connection at all the time with all of the HGW and/or the household device in connection with the HGW. Thus, the network server 103 may be so designed that it independently cuts the connection to any of the HGW and/or household device after a predetermined time has elapsed, for example, or if no communication is made to the HGW and/or household device for a certain period of time, or if a number of communications made to the HGW and/or household device is equal to or less than a certain number during the same period. Practically, the server cuts the connection by deleting the record of the connection data storage table corresponding to the relevant HGW and/or the household device.

When the server 103 deletes the record of the connection data storage table and cuts the connection, it may send a certain data packet to the HGW and/or the household device notifying them to that effect. The HGW and the household device properly grasp a state of connection between themselves and the network server at all the time, as they are notified of that fact. In the state that the connection remains established, the HGW and/or the household device can use the connection to communicate with the network server 103 and/or other household device connected to the Internet through the network server.

If the server 103 does not notify that it cuts off the connection, the HGW and/or the household device do not properly grasp the current state of connection to the network servers 103. If this is the case, the HGW or the household device receives a data packet containing an error message from the network server 103 even if the HGW or the household device transmits data packet 211 having SYN-data 205 of digit "0" to the network server 103 or other household device connected to the Internet through the network server 103, because there is no record that contains same number of device ID as the device ID of the HGW or the household device in the connection data storage table. In this case, the HGW or the household device can establish the connection again between itself and the network server by transmitting data packet 211 which carries SYN-data 205 of digit "1".

On the other hand, the connection may be cut by the HGW side or the household device side. It may be necessary to cut off the connection to the outside for a certain period of time, when there is no plan to make communication with the network server for the time being, or when a need arises to maintain security of the home network by cutting off the connection of the home network to the outside, or when the home network is repaired or otherwise maintained. Alternatively, the HGW or the household device may cut the connection with the network server 113 by transmitting specific data packet 211, i.e., data packet 211 having SYN-data 205 of digit "-1", for instance, to the network server 113, if the HGW and/or the household device is unable to make communication, or not desire to make communication, or not necessary to make communication with the outside.

When the network server 103 receives such data packet 211 that demands cut off of the connection, it carries out the same process as when it cuts off the connection by itself. Details of the process will therefore be skipped. Even if this is the case, however, the server 103 may send a specific data packet again to the HGW and/or the household device notifying them that it deleted the record of the connection data storage table and cut the connection.

If the HGW or the household device does not accurately grasp the state as to whether or not the connection is established between itself and network server 103, there occurs such cases as it attempts to establish a connection, or to cut off connection, setting aside the question of connection.

Under such situation, the HGW or the household device can transmits to the network server 103 via the Internet, data packet 211 containing SYN-data 205 set with digit "1" for establishing a connection between itself and the network server, or another data packet 211 containing SYN-data 205 set with digit "-1" for cutting off a virtual connection between itself and the network server, or still another data packet 211 containing SYN-data 205 set with digit "9" for instance, in order to make only an inquire to the network server of the present state of connection, without changing the state of connection, to achieve respective objects as needed.

When the HGW or the household device intends to inquire to the network server of the present state of connection, without changing the state of connection, it sends the data packet having SYN-data 205 set with digit "9" to the network server 103 via the Internet. In response to the inquiry from the HGW or the household device, the network server 103 searches through the connection data storage table 901 to determine whether or not there is a record that includes same device ID 905 as the device ID specified by it, without changing a content of the connection data storage table 901 currently stored in the server 103. The network server 103 then determines the present state of connection between the HGW or the household device and the server 103 according to the search result, and it sends data packet 509 including data 403 set with the present status back to the HGW or the household device. The HGW or the household device receives the data packet 509, and reads the data 403 from it. The HGW or the household device interprets the content, and it can restore the connection, if for instance, the connection has been cut off, or it can cut the connection if the connection is still maintained, or it can leave the connection without making any change.

The HGW or the household device can either establish a connection or maintain the connection between itself and the network server 103 automatically, regardless of the present state, after a predetermined time has elapsed or according to certain instruction or condition. The predetermined time can be a fixed time or it may be changeable. In this instance, the HGW or the household device may transmit the data packet 211 having SYN-data 205 set with digit "9" to the network server 103 in order to confirm the present state before establishing a connection, in the like manner as the above-described example. Or, the HGW or the household device may transmit the data packet 211 having SYN-data 205 set with digit "1" to the network server 103 to establish the connection, without even confirming the present state of connection.

The HGW or the household device may transmit to the network server data packet 1211, which includes security data 1213 covering security information, in addition to the contents included in the data packet 211 normally transmitted from the HGW or the household device to the network server.

The data packet 1211 is shown in Fig. 12.

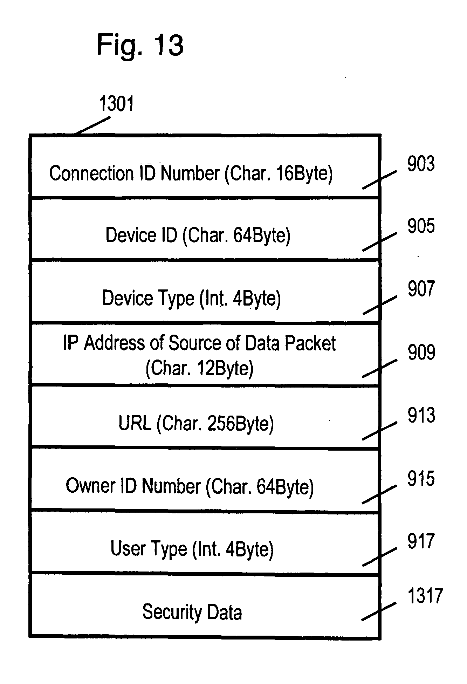

Fig. 13 shows connection data storage table 1301 which is generated by the network server 103, after the HGW or the household device transmits the data packet 1211 to the network server 103, and the network server 103 establishes a connection between the HGW or the household device and the network server. The connection data storage table 1301 of Fig. 13 differs from the table 901 shown in Fig. 9, in that it has security data 1317 for storage of the security data 1213 contained in the data packet 1211. The security data 1317 represents a password, for instance, which is used when data is transmitted to the HGW and/or the household device, with which the connection is been established.

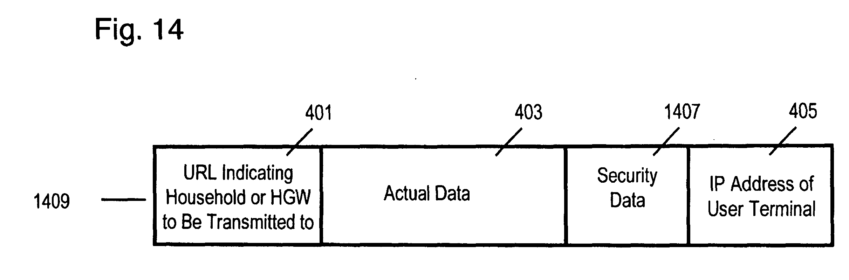

The data packet 1409 to be transmitted by the user terminal for transmission of data to the HGW and/or the household device shall have security data 1407 in addition to contents of the data packet 409 that the user terminal needs to transmit. This data packet 1409 is shown in Fig. 14.

The security data 1407 is identical to the security data 1317 stored in the connection data storage table 1301. The data 1407 may be a data relating to data 1317, for example may match with the security data 1317 when being converted with a predetermined function, for example. This function can be an irreversible function, as one-way function for example.

When the network server 103 receives the data packet 1409, which contains the security data 1407, it reads the security data 1407. The server 103 compares the data 1407 with the security data 1317 stored in the data storage table 1301 shown in Fig. 13, and authenticates the data packet 1409 as to whether or not it is to be transmitted to the HGW or the household device designated by URL 401.

The server 103 transmits to the HGW or the household device only data packet 1409, which is determined to be acceptable in the above comparison and allowable for transmission to the HGW or the household device designated by the URL 401.

The server 103 deletes or otherwise discards the data packet 1409 without transmitting it to the HGW or the household device, if the data packet 1409 is determined not acceptable in the above comparison and inappropriate for transmission to the HGW or the household device designated by the URL 401. The server 103 may send the packet 1409 back to the sender, or the user terminal, or it may instead send an error message to the user terminal.

In the above process, the network server 103 checks the security data. Alternatively however, the server 103 may transmits all of the data packets 1409 to the designated HGW or the household device, so as to make the HGW or the household device, instead of the server 103, check the received security data 1407 in comparison to the security data 1213 stored in it. In this case, the HGW or the household device is not necessarily required to transmit the security data 1213 with the data packet 1211 to the network server 103. However, the HGW or the household device may transmit the data 1213 to the network server 103 in the packet 1211.

The security data is a password necessary to make data communication with the HGW or the household device. The security data may instead be an encrypting key used when data is transmitted to the HGW or the household device. The HGW or the household device transmits data packet 1211 containing security data 1213, or the encrypting key, to the network server 103 as a data packet for the purpose of establishing a connection. When the server 103 received the data packet 1211, it processes the data packet according to its content. For example, the server 103 proceeds with such tasks as establishing, cutting and so forth of a connection according to a digit value of SYN-data 205, as described above. The server 103 stores the security data 1213, i.e., the encrypting key contained as security data 1317 in the data packet 1211, into connection data storage table 1301 when the server 103 generates the connection data storage table 1301.

When the network server 103 receives data packet 409, which contains the data to be transmitted from the user terminal to the relevant HGW or the household device, it identifies the HGW or the household device to which the proper data packet is to be transmitted, from URL 401 contained in the data packet 409. In addition, the server 103 searches through the connection data storage table 1301 to check whether or not a connection to the relevant HGW or the household device has already been established. If the connection has been established, the server 103 reads IP address 909 of the source of the data packet from the connection data storage table 1301 containing the relevant URL, for the purpose of transmitting a data packet to the relevant HGW or the household device via the Internet, and produces data packet 509 for transmission to the specified HGW or the household device. At the same time, the server 103 reads the security data 1317, or the encrypting key included in connection table 1301, and encrypts data 403 to be included into the data packet 509 using a prescribed procedure and the encrypting key. The server 103 may also encrypt the data 403, IP address 505 of the user terminal, and/or other data to be included into the data packet 509.

The network server 103 transmits the data packet 509 containing the data encrypted as above to the designated HGW or the household device via the Internet.

The HGW or the household device, upon receipt of the data packet 509, decrypts the encrypted data in the data packet 509 with prescribed procedure and a decrypting key prepared in advance.

The network server 103 receives the encrypting key 1407 in the data packet 1409, and stores this encrypting key 1407 as security data 1317 in the connection data storage table 1301. The network server 103 encrypts these data when it transmits the data packet 509 to the proper HGW or the household device.

Alternatively, the network server 103 may transmits the security data 1317 to the user terminal, so that the user terminal encrypts the data 403 with the security data 1317 or the encrypting key, and transmits the data packet 409 containing the encrypted data 403 to the HGW or the household device via network server 103.

If the security data 1317 serving as the encrypting key contained in the data packet 1211 transmitted by the HGW or the household device is an encrypting key associated with a public-key system cryptography, for instance, the decrypting key will never be known to a third person even if the encrypting key becomes known to the third person. Security of the data is thus secured since the data cannot be decrypted even if the encrypted data packet is stolen.

The encrypting key is not necessarily the one for the public-key system, but it can be a key used with any kind of cryptography, including a secret-key system and the like.

In the foregoing, although the security data 1213 contained in the data packet 1211 is illustrated as either one of the password and the encrypting key, it can have both the password and the encrypting key. Furthermore, the security data 1213 needs not be limited to the password and/or the encrypting key, but it can be a security data of other kind.

In the above embodiment, the security data 1213 contained in the data packet 1211 to be transmitted by the HGW or the household device to the network server 103 defines data to ensure security of the HGW or the household device. Therefore, the security data 1213 itself is accepted unconditionally into the network server 103 without getting authentication, and stored in the security data 1317 of the connection data storage table 1301. However, the security data 1213 may be authenticated by the network server 103, and used to protect security of the network server 103 from the HGW or the household device.

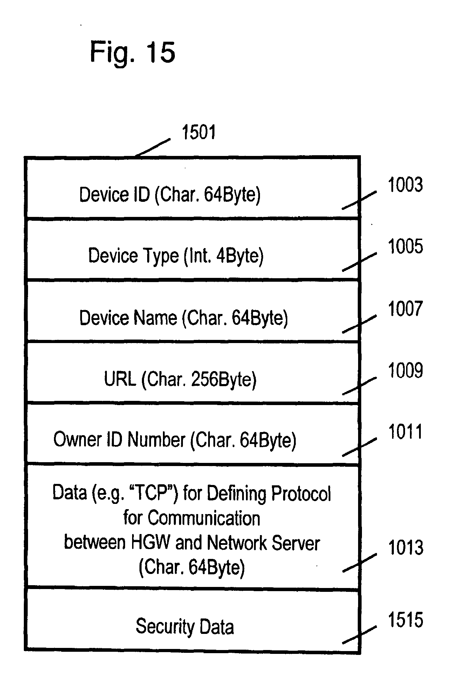

Fig. 15 shows record 1501 of HGW database according to this exemplary embodiment. The record 1501 differs from the record 1001 of HGW database, in that it has security data 1515 relating to the security. The security data 1515 has a certain predetermined relation to the security data 1213 contained in the data packet 1211 transmitted from the HGW to the network server 103, such that the security data 1515 is identical to the security data 1213, or it becomes identical to the security data 1213 when converted with a certain function. The data 1515 is used to authenticate the data packet 1211 transmitted from the HGW to the network server 103. Authentication of the packet 1211 is in a sense equivalent to authentication of the HGW itself, and the HGW is thus authenticated. In case of a failure in this authentication, the data packet 1211 is not accepted to the network server 103. Even if data packet 1211 is received, the network server 103 deletes, discards or sends it back to the original source. Or, the server 103 may send an error message back to the source, i.e., the HGW or the household device.

In the above embodiment, the HGW transmits the data packet 1211 containing data 1213 for security to the network server 103, and that the record 1501 of HGW database contains a data for authentication of the security data 1213. However, the household device may transmit the data packet 1211 containing the security data 1213 to the network server 103, and the record 801 of device database may includes the data to authenticates the security data 1213.

In this exemplary embodiment, the HGW or the household device transmits the security data 1213 for encrypting or authenticating the data packet 1409 to be transmitted to the HGW or the household device in the data packet 1211 to the network server 103.

The network server 103 may store these data for ensuring the security in advance as a master encrypting key or master authentication key, and retains them as security data 1515 in the record 1501 of the HGW database shown in Fig. 15. Instead, the server 103 may store in advance the data in the record 801 of the device database, though no detail is illustrated in the figure. It makes encryption possible from the initial data packet for establishing a connection between the HGW or the household device and the network server, thereby allowing authentication from that data packet and further improving the security.

Once the security data, such as the encrypting key and/or the authentication key, is exchanged between the HGW or the household device and the network servers 103, the encrypting key and/or the authentication key is used permanently. However, a new encrypting key and/or a new authentication key may be exchanged by means of data packet 1211 and used for data communication thereafter between the HGW or the household device and the network server 103, even after the security data has already been exchanged between the HGW or the household device and the network server 103, or even if the network server 103 has the master encrypting key and/or the master authentication key stored therein from the beginning. The security can thus be improved even more.

The HGW and/or the household device and the network server 103 may continue to keep the former encrypting key and/or the authentication key in their storages even after they exchanged the new encrypting key and/or the authentication key. Encryption and authentication of data packets are executed with the former encrypting key and/or the former authentication key in the storages, when it turns out to be unable to exchange the new encrypting key and/or the new authentication key successfully for some reasons. Thus, this embodiment makes possible to encrypt and authenticate the data packets continuously and to further improve the security even if renewal of the encrypting key and/or the authentication key results in a failure.

In addition, the HGW and/or the household device and the network server 103 may continue to keep the original master encrypting key and/or the master authentication key in their storages even after they exchanged the new encrypting key and/or the authentication key. Encryption and authentication of data packets are executed with the original master encrypting key and/or the master authentication key in the storages, when it turns out to be unable to exchange the new encrypting key and/or the authentication key successfully for some reasons. This embodiment can thus make possible to encrypt and authenticate the data packets continuously and to further improve the security even if renewal of the encrypting key and/or the authentication key results again in a failure.

In another exemplary embodiment, the HGW and/or the household device and the network server 103 continue to store the former encrypting key and/or the authentication key as well as the original master encrypting key and/or the master authentication key after new encrypting key and/or new authentication key have been exchanged between the HGW and/or the household device and the network server 103.

If, for any reason it turns out that exchange of the new encrypting key and/or the authentication key was not successful, encryption and authentication of the data packets are executed with the former encrypting key and/or the authentication key in the storages, and if exchange of the new encrypting key and/or the authentication key again failed, the encryption and the authentication of the data packets are executed with the original master encrypting key and/or the master authentication key also in the storages. This can thus make possible to encrypt and authenticate the data packets continuously and to further improve the security even if renewal of the encrypting key and/or the authentication key fails consecutively.

In this exemplary embodiment, the security data 1213 exchanged between the HGW and/or the household device and the network server 103 defines the encrypting key for encrypting the data packets transmitted between the HGW and/or the household device and the network server 103 and the authentication key for authenticating the packets.

The security data 1213 may also include an encryption algorithm in addition to at least one of the encrypting key and the authentication key. As a result, this can improve the security of data packets exchanged between the HGW or the household device and the network server 103 even further.

The security data 1213 may include an authentication algorithm in addition to at least one of the encrypting key and the authentication key. This can thus improve the security of data packets exchanged between the HGW or the household device and the network server 103 even further.

The security data 1213 may include the encryption algorithm. The algorithm can be changed dynamically according to a number of data packets exchanged between the HGW and/or the household device and the network server 103, a number of communication services, transmission speed, a nature of the communication services, and the like. Accordingly, this embodiment allows selection of an optimum encryption algorithm without imposing an excessive load on the communication made between the HGW and/or the household device and the network server 103, and maintaining the communication satisfactorily at all the time. In addition, a required strength of the cryptography can be changed depending on whether the data packets need to maintain a very high level of security or they do not need to maintain the security so much, for instance, thereby accomplishing both the optimum level of cryptography and quality of the communication at the same time.

In this exemplary embodiment, the security data 1213 for encrypting and/or authenticating the data packet 1409 to be transmitted to the HGW and/or the household device is sent to the network server 103 by means of the data packet 1211 from the HGW and/or the household device.

Also, in this exemplary embodiment, the security data 1213 is transmitted by the HGW to the network server 103 by means of the data packet 1211. The data 1213 is used for encryption and authentication of the data packets transmitted between the HGW and the network server 103, as well as those data packets transmitted between all household device connected through the home network to the HGW and the network server 103. Accordingly, this centralizes all communications made between all of the household device connected through the home network to the HGW and the network server 103 into the HGW. This can simplify the communication process and centralize the communications, while realizing intensive management of the security at the same time, and therefore it further improves the security.

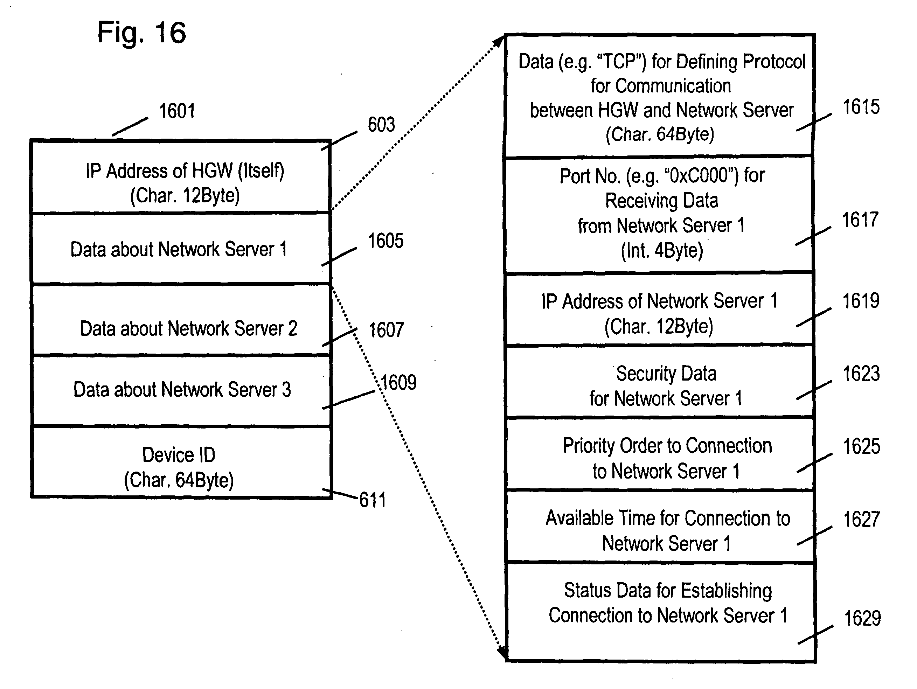

Although the communication system of the above exemplary embodiment has one network server 103 that establishes a connection with the HGW and/or the household device, it can include a plurality of network servers. Fig. 16 illustrates record 1601 of the network server connection data table in this case. In the table 1601 shown in Fig. 16, although network server 3 can establish the connection from the HGW, the same table can be used practically by other servers than the server 3. Fig. 16 shows only information on network server 1, but similar information is also available on other network servers.

In this exemplary embodiment, the HGW and/or the household device that intends to establish a connection determines which network server to use for establishing the connection by checking in advance contents of the network server connection data table 1601 stored therein. The network server connection data table 1601 used for this purpose comprises priority order 1625 for establishing connection to network server 1 (or 1 through 3), serviceable time 1627 for establishing connection to the network server 1 (or 1 through 3), and status data 1629 on establishment of connection with the server 1 (through 3).

The HGW and/or the household device that intends to establish a connection first consults with the priority order 1625 of connection in the network server connection data table 1601 stored therein, and determines the order of network servers with which to establish the connection on priority basis. The HGW and/or the household device then proceeds with the following processes in order to establish the connection according to the determined order.

Next, the HGW and/or the household device that intends to establish the connection checks contents of the serviceable time 1627 for establishing connection in the network server connection data table 1601, and determines whether or not the separately stored present time is within the time available for establishing the connection. If the present time is outside of the serviceable time for establishing connection with any of the network servers, that network server is excluded from the subjects of connection.

Finally, the HGW and/or the household device that intends to establish the connection refers to contents of the status data 1629 in the network server connection data table 1601, to find out whether any of the network servers concerned is in an available state now for establishing a virtual connection. The HGW and/or the household device determines network server 103 with which to establishes the connection according to the above-described processes, transmits data packet 1211 having SYN-data 205 of digit "1" to the server 103, and establishes a connection.

According to this exemplary embodiment, the factors that determine the network server with which to establish the connection are the priority order 1625 of connection, the serviceable time 1627 for establishing the connection, and the status data 1629 on establishment of the connection. However, the determining factors can be any data other than those described above, and they need not include any part of them.

Contents of the status data 1629 on establishment of connection includes such information as to whether or not the network server 103 is out of order, a loading status of the server 103, whether the server 103 is used preferentially by other HGW or household device, and whether the server 103 refuses establishment of the connection, and that the status data 1629 may include a combination of two or more of the above information.

In this exemplary embodiment, the factors that determine the network server 103 for establishment of the connection are not changed, but they may be changeable. If the determining factors are changeable, the factors may be changed depending on a condition of the network server 103, a condition of the HGW and/or the household device, other circumstances than the above conditions, and a combination of any of the above conditions.

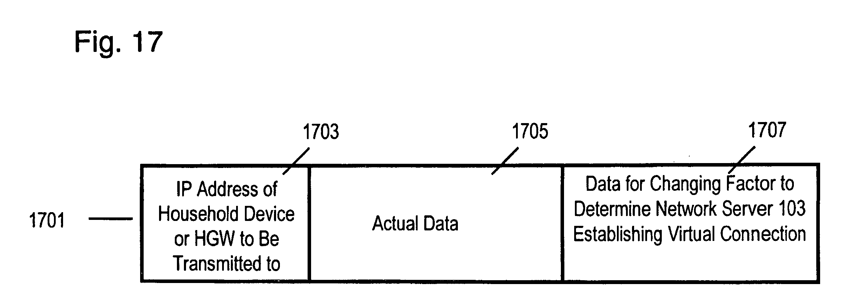

If any of the factors that determine the network server 103 for establishment of the connection is changed for any reason other than the condition of the HGW or the household device, data 1707 for changing the factor is transmitted by means of data packet 1701 shown in Fig. 17 from the network server 103 or other device to the HGW and/or the household device. The data 1707 can be information for lowering the priority order of connection to the network server 103 itself, if the network server 103 carries heavy load. Or, the data 1707 can be such information as to exclude a certain period beginning now until a certain time from a time available for establishing the connection to the network server 103, if the network server 103 carries a heavy load. Or, the data 1707 can also be information directing the HGW and/or the household device in a manner to induce or compel them so that they voluntarily withhold themselves from establishing a connection with the network server 103.

In this exemplary embodiment, the data packet 1701 is transmitted from network server 103 or other device to the HGW and/or the household device. The packet 1701 contains any of the following information as the data 1707 to change the factors that determine the network server 103 for establishing a connection:
(a) status information indicating an amount of the present load on the network server 103 itself;
(b) status information for inducing or compelling into establishment of a connection with any of other network servers for the reason of heavy load borne presently by the network server itself;
(c) status information for inducing or compelling into establishment of a connection with another specified network server for the reason of heavy load borne presently by the network server itself;
(d) status information for inducing or compelling into establishment of a new connection from now on with any other network server for the reason of heavy load borne presently by the network server itself; and
(e) status information for inducing or compelling into disconnection of the ongoing connection and establishing a new connection with other network server for the reason of heavy load borne presently by the network server itself.

In this first exemplary embodiment, in which there are more than two network servers 103 for establishing a connection, one of the network servers 103 to be used for establishing the connection is determined according to the information available from the network server connection data table 1601. However, the network server 103 can be determined using other factors without dependent on the information contained in the network server connection data table 1601. The network server 103 for establishing the connection can be determined at random according to some uncertain factors, such as uniform pseudo random numbers. Or, the server 103 can be determined stochastically according to random variables on the basis of some probability distributions.

In the case the network server 103, with which the connection is established, is determined stochastically, any of new connections to be established heretofore may also be determined according to these stochastic factors. The process of disconnecting the already established connection, or the processes of disconnecting the ongoing connection and establishing a new connection can also be determined and executed according to these stochastic factors.

All functions or a part of the functions, operations, and effects of the user terminal, the network server, HGW and the household device in the first exemplary embodiment can be achieved by means of CPU's included in the individual devices and programs executed by these CPU's. If these functions are achieved by the CPU's included in the individual devices and the programs executed by the CPU's, any of these programs is stored in a recording medium that is readable by the CPU's.

### INDUSTRIAL APPLICABILITY

According to a method of communication and communication system of the present invention, any device and devices connected to an open type network can make duplex communications at all the time with respect to one another without having any special administrative server to designate a communicating object, any administrative data communication, or any management protocol.

## Claims

1. A method of communication, comprising the steps of:
providing first, second, and third data processors connected to each other via a first network;
allowing said first data processor to store a network address of said second data processor and a protocol used for communication;
allowing said second data processor to store a device ID of said first data processor, an identification code for accessing said first data processor from outside thereof, and said protocol in corresponding manner;
allowing said first data processor to transmit a first data packet to said second data processor under said protocol, said first data packet containing said network address of said second data processor, data indicating that said packet is an initial data packet, and said device ID of said first data processor;
allowing said first data processor to stand by for receiving a data packet from said second data processor after transmitting said first data packet;
allowing said second data processor to receive said first data packet under said protocol;
if said first data packet contains said data indicating that said packet is the initial data packet, allowing said second data processor to store a network address of a source sending said first data packet contained in said first data packet and to correspond the network address of the source to correspond to said device ID, in addition to said identification code stored in correlation to said device ID contained in said first data packet;
if said first data packet does not contain said data indicating that said packet is the initial data packet, allowing said second data processor to verify whether or not said network address contained in correlation to said device ID contained in said first data packet is identical to said network address of the source sending said first data packet, said network address of the source being contained in said first data packet;
allowing said second data processor to stand by for receiving a second data packet to be transmitted from said third data processor to said first data processor;
allowing said second data processor to receive said second data packet to be transmitted from said third data processor while said step of allowing said second data processor to stand by for receiving said second data packet, said second data packet containing said identification code of said first data processor and said protocol;
allowing said second data processor to identify said network address contained in correlation to said identification code contained in said second data packet;
allowing said second data processor to transmit said second data packet to said network address of said first data processor under said protocol;
allowing said first data processor to receive said second data packet under said protocol; and
allowing said first data processor to transmit another data packet to said second data processor under said protocol after a predetermined time, said another data packet containing said network address of said second data processor and said device ID of said first data processor in the like manner as said first data packet, said another data packet not containing said data indicating that said packet is the initial data packet.

2. The method as recited in claim 1, wherein said identification code of said first data processor includes a character string including information about said protocol and information about a location of said first data processor in said first network.

3. The method as recited in claim 1 or 2, further comprising the step of:
allowing said second data processor to store said device ID of said first data processor, said identification code of said first data processor, said protocol, and data used for authentication of said first data processor for right to communicate, in corresponding manner,
wherein said first data packet contains said data for authentication of said first data processor for right to communicate.

4. The method as recited in any one of claims 1 to 3, further comprising the steps of:
allowing said second data processor to transmit, to said first data processor, data about a load borne by said second data processor while said step of allowing said first data processor to stand by for receiving the data packet from said second data processor;
allowing said first data processor to determine a load status of said second data processor based on said received data about the load; and
if said load status is not small than a predetermined amount, allowing said first data processor to transmit said first data packet to said third data processor connected with said first data processor via said first network under said protocol.

5. The method as recited in any one of claims 1 to 3, further comprising the steps of:
allowing said second data processor to transmit, to said first data processor, data for directing said first data processor to switch to said third data processor while said step of allowing said first data processor to stand by for receiving the data packet from said second data processor; and
allowing said first data processor to transmit said first data packet to said third data processor under said protocol after said first data processor receives said data for directing.

6. The method as recited in claim 5, wherein said data for directing includes another data for identifying said third data processor.

7. The method as recited in any one of claims 1 to 6, further comprising the step of:
allowing said second data processor to store said device ID of said first data processor, said identification code of said first data processor, said protocol, and a master authentication key in corresponding manner,
wherein said first data packet includes data to be authenticated with said master authentication key.

8. The method as recited in claim 7, further comprising the step of:
allowing said first data processor to transmit, to said second data processor, a data packet containing a first authentication key for use in communication between said first data processor and said second data processor, after said step of allowing said second data processor to store said master authentication key.

9. The method as recited in claim 8, further comprising the steps of:
allowing said first and second data processors to store said first authentication key; and
allowing said first and second data processors to use said stored first authentication key if a failure occurs in exchanging a second authentication key.

10. The method as recited in claim 8, further comprising the step of:
allowing said first and second data processors to exchange a second authentication key for use in communication between said first and second data processors with using said master encrypting key, if a failure occurs in exchanging said first authentication key.

11. The method as recited in any one of claims 8 to 10, further comprising the step of:
allowing said first and second data processors to communicate with each other by using said master encrypting key, if a failure occur in exchanging said first and second authentication keys.

12. The method as recited in any one of claims 8 to 11, further comprising the step of:
allowing said first data processor to transmit, to said second data processor, a data packet containing an encryption algorithm for use in communication between said first data processor and said second data processor.

13. The method as recited in any one of claims 1 to 6, further comprising the step of:
allowing said second data processor to store said device ID of said first data processor, said identification code of said first data processor, said protocol, and a master encrypting key in corresponding manner,
wherein said first data packet includes data encrypted by said master encrypting key.

14. The method as recited in claim 13, further comprising the step of:
allowing said first data processor to transmit, to said second data processor, a data packet containing a first encrypting key for use in communication between said first data processor and said second data processor, after said step of allowing said second data processor to store said master encrypting key.

15. The method as recited in claim 14, further comprising the steps of:
allowing said first and second data processors to store said first encrypting key; and
allowing said first and second data processors to use said stored first encrypting key if a failure occurs in exchanging a second encrypting key.

16. The method as recited in claim 14, further comprising the step of:
allowing said first and second data processors to exchange a second encrypting key for use in communication between said first and second data processors with using said master encrypting key, if a failure occurs in exchanging said first encrypting key.

17. The method as recited in any one of claims 14 to 16, further comprising the step of:
allowing said first and second data processors to communicate with each other by using said master encrypting key, if a failure occurs in exchanging said first and second encrypting keys.

18. The method as recited in any one of claims 14 to 17, further comprising the step of:
allowing said first data processor to transmit, to said second data processor, a data packet containing an encryption algorithm for use in communication between said first data processor and said second data processor.

19. The method as recited in claim 18, wherein said encryption algorithm is changed dynamically according to a transmission speed in said first network.

20. The method as recited in claim 18, wherein said encryption algorithm is changed dynamically according to a number of communication services made between said first data processor and said second data processor.

21. The method as recited in claim 18, wherein said encryption algorithm is changed dynamically according to a nature of communication services made between said first data processor and said second data processor.

22. The method as recited in any one of claims 14 to 21, further comprising the step of:
allowing said first data processor to transmit, to said second data processor, a data packet containing an authentication algorithm for use in communication between said first data processor and said second data processor.

23. The method as recited in any one of claims 1 to 21, further comprising the steps of:
providing a fourth data processor in connection to said first data processor via a second network; and
allowing said first data processor to carry out communications collectively between said fourth data processor and said second data processor.

24. A communication system comprising:
a first data processor;
a second data processor connected to said first data processor via a first network; and
a third data processor connected to said first and second data processors via said first network,
wherein said first data processor stores a network address of said second data processor and a protocol used for communication,
wherein said second data processor stores a device ID of said first data processor, an identification code for accessing said first data processor from outside thereof, and said protocol in corresponding manner,
wherein said first data processor transmits a first data packet to said second data processor under said protocol, said first data packet containing said network address of said second data processor, data indicating that said packet is an initial data packet, and said device ID of said first data processor,
wherein said first data processor stands by for receiving a data packet from said second data processor after transmitting said first data packet,
wherein said second data processor receives said first data packet under said protocol,
wherein, if said first data packet contains said data indicating that said packet is the initial data packet, said second data processor stores a network address of a source sending said first data packet contained in said first data packet and to correspond the network address of the source to correspond to said device ID, in addition to said identification code stored in correlation to said device ID contained in said first data packet,
wherein, if said first data packet does not contain said data indicating that said packet is the initial data packet, said second data processor verifies whether or not said network address contained in correlation to said device ID contained in said first data packet is identical to said network address of the source sending said first data packet, said network address of the source being contained in said first data packet,
wherein said second data processor stands by for receiving a second data packet to be transmitted from said third data processor to said first data processor,
wherein said second data processor receives said second data packet to be transmitted from said third data processor while said second data processor stands by for receiving said second data packet, said second data packet containing said identification code of said first data processor and said protocol,
wherein said second data processor identifies said network address contained in correlation to said identification code contained in said second data packet,
wherein said second data processor transmits said second data packet to said network address of said first data processor under said protocol,
wherein said first data processor receives said second data packet under said protocol, and
wherein said first data processor transmits another data packet to said second data processor under said protocol after a predetermined time, said another data packet containing said network address of said second data processor and said device ID of said first data processor in the like manner as said first data packet, said another data packet not containing said data indicating that said packet is the initial data packet.

25. The system as recited in claim 24, wherein said identification code of said first data processor includes a character string including information about said protocol and information about a location of said first data processor in said first network.

26. The system as recited in claim 24 or 25,
wherein said second data processor stores said device ID of said first data processor, said identification code of said first data processor, said protocol, and data used for authentication of said first data processor for right to communicate, in corresponding manner, and
wherein said first data packet contains said data for authentication of said first data processor for right to communicate.

27. The system as recited in any one of claims 24 to 26,
wherein said second data processor transmits, to said first data processor, data about a load borne by said second data processor while said step of allowing said first data processor to stand by for receiving the data packet from said second data processor,
wherein said first data processor determines a load status of said second data processor based on said received data about the load, and
wherein, if said load status is not small than a predetermined amount, said first data processor transmits said first data packet to said third data processor connected with said first data processor via said first network under said protocol.

28. The system as recited in any one of claims 24 to 26;
wherein said second data processor transmits, to said first data processor, data for directing said first data processor to switch to said third data processor while said first data processor stands by for receiving the data packet from said second data processor, and
wherein said first data processor transmits said first data packet to said third data processor under said protocol after said first data processor receives said data for directing.

29. The system as recited in claim 28, wherein said data for directing includes another data for identifying said third data processor.

30. The system as recited in any one of claims 24 to 29,
wherein said second data processor stores said device ID of said first data processor, said identification code of said first data processor, said protocol, and a master authentication key in corresponding manner, and
wherein said first data packet includes data to be authenticated with said master authentication key.

31. The system as recited in claim 30, wherein said first data processor transmits, to said second data processor, a data packet containing a first authentication key for use in communication between said first data processor and said second data processor, after said step of allowing said second data processor to store said master authentication key.

32. The system as recited in claim 31,
wherein said first and second data processors store said first authentication key, and
wherein said first and second data processors use said stored first authentication key if a failure occurs in exchanging a second authentication key.

33. The system as recited in claim 31, wherein said first and second data processors exchange a second authentication key for use in communication between said first and second data processors with using said master encrypting key, if a failure occurs in exchanging said first authentication key.

34. The system as recited in any one of claims 31 to 33, wherein said first and second data processors communicate with each other by using said master encrypting key, if a failure occur in exchanging said first and second authentication keys.

35. The system as recited in any one of claims 31 to 34, wherein said first data processor transmits, to said second data processor, a data packet containing an encryption algorithm for use in communication between said first data processor and said second data processor.

36. The system as recited in any one of claims 24 to 29,
wherein said second data processor stores said device ID of said first data processor, said identification code of said first data processor, said protocol, and a master encrypting key in corresponding manner, and
wherein said first data packet includes data encrypted by said master encrypting key.

37. The system as recited in claim 36, wherein said first data processor transmits, to said second data processor, a data packet containing a first encrypting key for use in communication between said first data processor and said second data processor, after said second data processor stores said master encrypting key.

38. The system as recited in claim 37,
wherein said first and second data processors store said first encrypting key, and
wherein said first and second data processors use said stored first encrypting key if a failure occurs in exchanging a second encrypting key.

39. The system as recited in claim 37, wherein said first and second data processors exchange a second encrypting key for use in communication between said first and second data processors with using said master encrypting key, if a failure occurs in exchanging said first encrypting key.

40. The system as recited in any one of claims 37 to 39, wherein said first and second data processors communicate with each other by using said master encrypting key, if a failure occurs in exchanging said first encrypting key and a second encrypting key.

41. The system as recited in any one of claims 37 to 40, wherein said first data processor transmits, to said second data processor, a data packet containing an encryption algorithm for use in communication between said first data processor and said second data processor.

42. The system as recited in claim 41, wherein said encryption algorithm is changed dynamically according to a transmission speed in said first network.

43. The system as recited in claim 41, wherein said encryption algorithm is changed dynamically according to a number of communication services made between said first data processor and said second data processor.

44. The system as recited in claim 41, wherein said encryption algorithm is changed dynamically according to a nature of communication services made between said first data processor and said second data processor.

45. The system as recited in any one of claims 37 to 44, wherein said first data processor transmits, to said second data processor, a data packet containing an authentication algorithm for use in communication between said first data processor and said second data processor.

46. The system as recited in any one of claims 24 to 45, further comprising:
a fourth data processor in connection to said first data processor via a second network,
wherein said first data processor carries out communications collectively between said fourth data processor and said second data processor.

47. A program for making a computer execute said method as recited in any one of claims 1 to 23.

48. A recording medium readable by the computer and recording said program as recited in claim 47.

49. A method of communication using a second data processor connected to a first network, said method comprising the steps of:
providing first and third data processors connected to each other via a first network, said first data processor storing a network address of said second data processor and a protocol used for communication;
storing a device ID of said first data processor, an identification code for accessing said first data processor from outside thereof, and said protocol in corresponding manner;
receiving a first data packet from said first data processor under said protocol, said first data packet containing said network address of said second data processor, data indicating that said packet is an initial data packet, and said device ID of said first data processor;
receiving said first data packet under said protocol;
if said first data packet contains said data indicating that said packet is the initial data packet, storing a network address of a source sending said first data packet contained in said first data packet and to correspond the network address of the source to correspond to said device ID, in addition to said identification code stored in correlation to said device ID contained in said first data packet;
if said first data packet does not contain said data indicating that said packet is the initial data packet, verifying whether or not said network address contained in correlation to said device ID contained in said first data packet is identical to said network address of the source sending said first data packet, said network address of the source being contained in said first data packet;
standing by for receiving a second data packet to be transmitted from said third data processor to said first data processor;
receiving said second data packet to be transmitted from said third data processor while said step of standing by for receiving said second data packet, said second data packet containing said identification code of said first data processor and said protocol;
identifying said network address contained in correlation to said identification code contained in said second data packet;
transmitting said second data packet to said network address of said first data processor under said protocol;
receiving another data packet from said first data processor under said protocol after a predetermined time, said another data packet containing said network address of said second data processor and said device ID of said first data processor in the like manner as said first data packet, said another data packet not containing said data indicating that said packet is the initial data packet.

50. The method as recited in claim 49, wherein said identification code of said first data processor includes a character string including information about said protocol and information about a location of said first data processor in said first network.

51. The method as recited in claim 49 or 50, further comprising the step of:
storing said device ID of said first data processor, said identification code of said first data processor, said protocol, and data used for authentication of said first data processor for right to communicate, in corresponding manner,
wherein said first data packet contains said data for authentication of said first data processor for right to communicate.

52. The method as recited in any one of claims 49 to 51, further comprising the step of:
transmitting, to said first data processor, data about a load borne by said second data processor while said step of allowing said first data processor to stand by for receiving the data packet from said second data processor,
wherein said first data processor determines a load status of said second data processor based on said received data about the load; and
wherein, if said load status is not small than a predetermined amount, said first data processor transmits said first data packet to said third data processor connected with said first data processor via said first network under said protocol.

53. The method as recited in any one of claims 49 to 51, further comprising the step of:
transmitting, to said first data processor, data for directing said first data processor to switch to said third data processor while said step of allowing said first data processor to stand by for receiving the data packet from said second data processor,
wherein said first data processor transmits said first data packet to said third data processor under said protocol after said first data processor receives said data for directing.

54. The method as recited in claim 53, wherein said data for directing includes another data for identifying said third data processor.

55. The method as recited in any one of claims 49 to 54, further comprising the step of:
storing said device ID of said first data processor, said identification code of said first data processor, said protocol, and a master authentication key in corresponding manner,
wherein said first data packet includes data to be authenticated with said master authentication key.

56. The method as recited in claim 55, wherein said first data processor transmits, to said second data processor, a data packet containing a first authentication key for use in communication between said first data processor and said second data processor, after said step of storing said master authentication key.

57. The method as recited in claim 56, further comprising the steps of:
storing said first authentication key; and
using said stored first authentication key if a failure occurs in exchanging a second authentication key.

58. The method as recited in claim 56, further comprising the step of:
exchanging a second authentication key for use in communication with said first data processor with using said master encrypting key, if a failure occurs in exchanging said first authentication key.

59. The method as recited in any one of claims 56 to 58, further comprising the step of:
communicating with said first data processor with using said master encrypting key, if a failure occur in exchanging said first and second authentication keys.

60. The method as recited in any one of claims 56 to 59, wherein said first data processor transmits, to said second data processor, a data packet containing an encryption algorithm for use in communication between said first data processor and said second data processor.

61. The method as recited in any one of claims 49 to 54, further comprising the step of:
storing said device ID of said first data processor, said identification code of said first data processor, said protocol, and a master encrypting key in corresponding manner,
wherein said first data packet includes data encrypted by said master encrypting key.

62. The method as recited in claim 61, wherein said first data processor transmits, to said second data processor, a data packet containing a first encrypting key for use in communication between said first data processor and said second data processor, after said step of storing said master encrypting key.

63. The method as recited in claim 62, further comprising the steps of:
storing said first encrypting key; and
using said stored first encrypting key if a failure occurs in exchanging a second encrypting key.

64. The method as recited in claim 62, further comprising the step of:
exchanging a second encrypting key for use in communication between said first and second data processors with using said master encrypting key, if a failure occurs in exchanging said first encrypting key.

65. The method as recited in any one of claims 62 to 64, further comprising the step of:
communicating with said first data processor with using said master encrypting key, if a failure occurs in exchanging said first and second encrypting keys.

66. The method as recited in any one of claims 62 to 65, wherein said first data processor transmits, to said second data processor, a data packet containing an encryption algorithm for use in communication between said first data processor and said second data processor.

67. The method as recited in claim 66, wherein said encryption algorithm is changed dynamically according to a transmission speed in said first network.

68. The method as recited in claim 66, wherein said encryption algorithm is changed dynamically according to a number of communication services made between said first data processor and said second data processor.

69. The method as recited in claim 66, wherein said encryption algorithm is changed dynamically according to a nature of communication services made between said first data processor and said second data processor.

70. The method as recited in any one of claims 62 to 69, wherein said first data processor transmits, to said second data processor, a data packet containing an authentication algorithm for use in communication between said first data processor and said second data processor.

71. The method as recited in any one of claims 49 to 70, further comprising the steps of:
providing a fourth data processor in connection to said first data processor via a second network,
wherein said first data processor carries out communications collectively between said fourth data processor and said second data processor.

72. A program for executing said method as recited any one of claims 49 to 71 in said second data processor.

73. A recording medium recording said program as recited in claim 72.
